# EUROPEAN PATENT SPECIFICATION

(11) **EP 3 634 184 B1**
(45) Date of publication and mention of the grant of the patent: **04.08.2021**
(21) Application number: 18720770.9
(22) Date of filing: 06.04.2018
(51) Int. Cl.: A47J 31/52, A47J 31/44

(54) **DEVICE FOR SIGNALLING THE LEVEL REACHED BY THE COFFEE INFUSION IN A MOKA COFFEEPOT**
VORRICHTUNG ZUR SIGNALISIERUNG DES ERREICHTEN KAFFEEBRAUFÜLLSTANDES IN EINER MOKKAKANNE
DISPOSITIF SERVANT À SIGNALER LE NIVEAU ATTEINT PAR L'INFUSION DE CAFÉ DANS UNE CAFETIÈRE À MOKA

(30) Priority: 06.04.2017 IT 201700038289
(43) Date of publication of application: 15.04.2020
(73) Proprietor: Amocomodo S.r.l. Unipersonale, 47921 Rimini (IT)
(72) Inventor: RAMBELLI, Antonio, 47921 Rimini (IT)
(74) Representative: Aprà, Mario
(86) International application number: PCT/IB2018/000342
(87) International publication number: WO 2018/185551

(56) References cited:
- WO-A1-2007/013013
- WO-A2-2011/002421
- DE-A1- 10 230 951
- IT-B- 1 280 381

## Description

The present invention relates to a device for signalling the level reached by the coffee infusion in a moka coffeepot.

From patent IT1280381 a device is known for signalling the level reached by a liquid in a container. This device comprises:
- two electrical connectors that extend with one portion inside the container;
- a source of electrical energy, a first pole of which is connected to a first connector, and a second pole of which is connected to a second connector;
- an acoustic alert powered by the source in the event of the passage of electrical current between the connectors, a passage of current that occurs when the liquid comes into contact with both connectors, and
- a body carried by the container and supporting the connectors. In particular, said body has a slot engaged by a top edge of said container.

Furthermore, according to the afore-mentioned patent IT1280381, the container may consist of a pot for making coffee, particularly of the so-called moka coffeepot type, wherein the infusion of coffee collects in a cup or pot-like body through a vertical delivery conduit, placed centrally in said cup-like body and having at least one delivery opening at the top of the conduit.

The afore-mentioned known device makes it possible to remotely signal, by means of the emission of an alarm signal, when the level of liquid in the coffeepot body reaches a predetermined level.

Moreover, the afore-mentioned known device has the electrical connectors placed close to one another, so as to limit the dimensions of the device. For this reason, splashes of coffee infusion that strike said connectors may deposit liquid on and between the connectors, sometimes resulting in the unwanted and premature closure of the corresponding electrical circuit and thus the emission of an early signal, not corresponding to the predetermined level of liquid in the coffeepot being reached.

An object of the present invention is to provide a device for signalling the level reached by the coffee infusion in a moka coffeepot, which can ensure, during the coffee infusion preparation phase, the emission of an alarm signal once the level of liquid in the coffeepot reaches a predetermined level, thereby preventing splashes of liquid from causing an early signal.

A further object of the present invention is to provide a device for signalling the level reached by the coffee infusion in a moka coffeepot, which is operatively stable and prevents splashes of liquid from leaving the coffeepot while the coffee infusion is being prepared.

Yet another object of the present invention is to provide a device for signalling the level reached by the coffee infusion in a moka coffeepot, which is structurally simple, safe and reliable to operate and economical to manufacture.

In view of these objects, the present invention provides a device for signalling the level reached by the coffee infusion in a moka coffeepot, the essential characteristic of which forms the subject matter of claim 1. Further advantageous features of the device according to the invention are described in the dependent claims.

Other characteristics and advantages of the invention will become more apparent from the following detailed description of an example of embodiment of the invention with reference to the figures in the accompanying drawing, which show important details for the invention, and from the claims. The characteristics illustrated are not necessarily to scale and are represented so that the specific features according to the invention are clearly highlighted. The different characteristics can be produced individually or in any combination with one another, as variants of the invention.

In the accompanying drawing:
- Fig. 1 shows a side elevation view of the device for signalling the level reached by the coffee infusion in a moka coffeepot, according to an example of an embodiment of the present invention, wherein an essentially spherical guard, for one part of the device, is illustrated schematically with broken lines;
- Fig. 2 shows a plan view from below of the device shown in fig. 1;
- Fig. 3 shows a three-quarter overhead perspective view of the device shown in fig. 1, wherein said essentially spherical guard is partially removed;
- Fig. 4 shows a three-quarter perspective view from below of the device shown in fig. 1, wherein said essentially spherical guard is partially removed;
- Fig. 5 shows a mid-line vertical sectional view of the device shown in Fig. 4, wherein said guard is completely removed;
- Fig. 6 shows an overhead plan view in a different scale of the device shown in fig. 1 applied for use on a coffeepot, wherein the cover of said coffeepot and said essentially spherical guard of said device are removed for illustrative clarity;
- Fig. 7 shows a sectional view along the line VII-VII shown in Fig. 6;
- Fig. 8 shows a detailed view of the detail shown in Fig. 7, wherein however a variant of an embodiment of the device according to the present invention is shown;
- Fig. 9 shows a perspective view of the device shown in Fig. 1 in a position of use on a moka coffeepot with the cover open for illustrative clarity;
- Fig. 10 shows a side elevation view of a variant of an embodiment of the device shown in fig. 1.

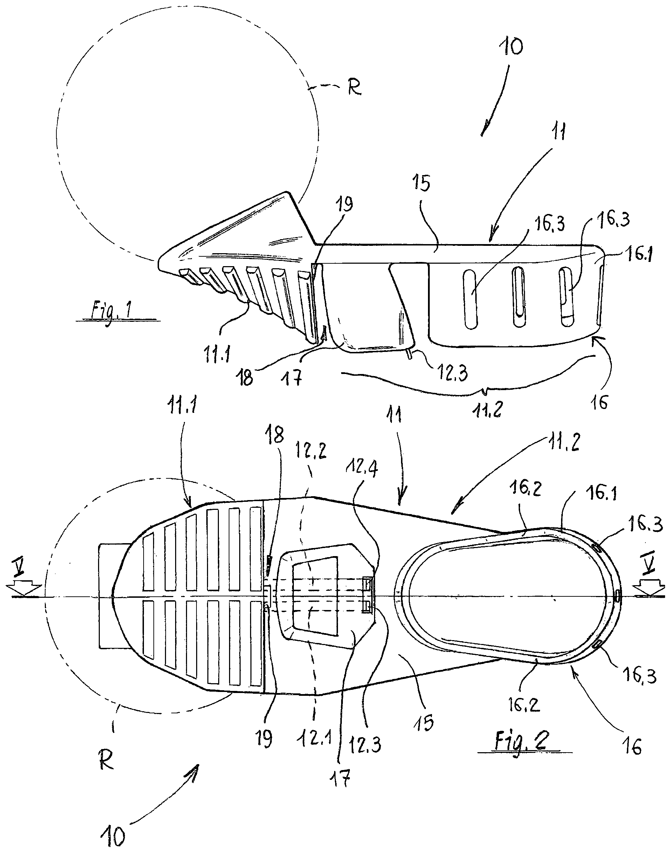

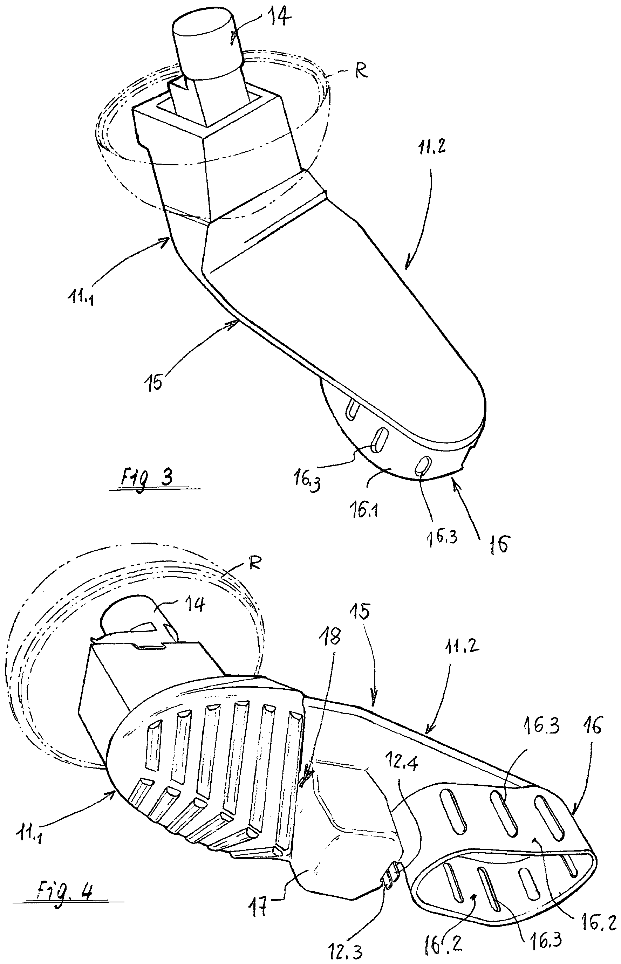

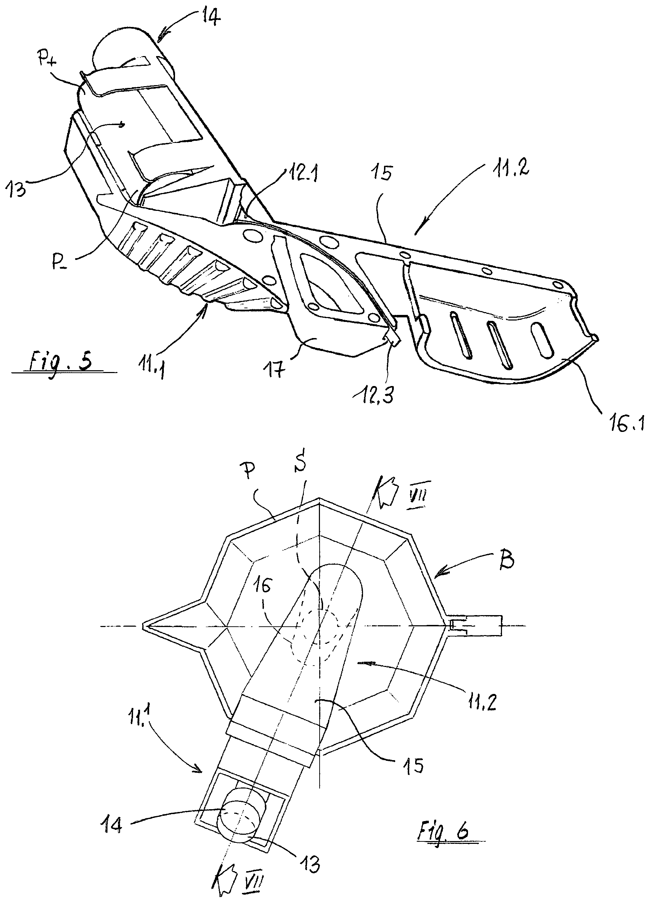

With reference to figures 1 to 7 and 9 in the accompanying drawing, the reference number 10 is used to indicate as a whole the device for signalling the level reached by the coffee infusion in a moka coffeepot B, according to the afore-mentioned example of an embodiment of the present invention. Said signalling device 10 is used in a moka coffeepot B (figures 6, 7, 9), having a side wall P and into which the infusion is delivered by means of at least one opening A provided in the top area S of a vertical central conduit C.

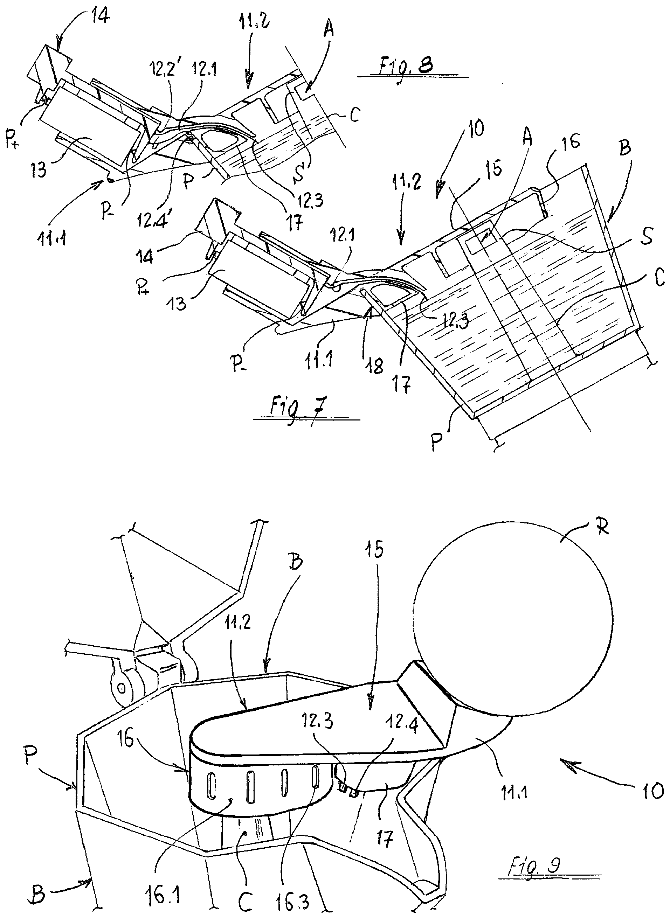

Said signalling device 10 comprises, in a known manner:
- a body made of a plastic material 11, having an outer part 11.1 and an inner part 11.2 with respect to said coffeepot B by which it is supported. Said body 11 comprises, in particular, a first electrical connector 12.1 and a second electrical connector 12.2 (fig. 2), which are electrically insulated in said body 11 and extend with a respective portion of free end, forming a corresponding electrode 12.3, 12.4, outside the body 11 inside the coffeepot B;
- a source 13 of electrical energy (figs. 5, 7), supported by means of said outer part 11.1 of said body 11 and a first pole of which P+ is electrically connected to the other end of said first electrical connector 12.1 and a second pole of which P- is electrically connected to the other end of said second electrical connector 12.2;
- electric alert means, of a known type and shown schematically as 14, supported by means of said outer part 11.1 of said body 11 and powered by said source 13 in the event of the passage of electrical current between said electrodes 12.3, 12.4.

Said signalling device 10, according to the present embodiment of the invention, also comprises:
- in said inner part 11.2 of the body 11, a straight, rigid arm 15, extending above said top area S of said vertical central conduit C of said coffeepot B (fig. 7);
- a splash screen 16, integral with said arm 15, which laterally wraps around said top area S of said central conduit C of said coffeepot B in the area of said at least one opening A;
- a lower overhang 17 integral with said arm 15 and extending inside said coffeepot B, opposite to and separate from said screen 16, and from which said electrodes 12.3, 12.4 project underneath and downwards. Said lower overhang 17 is provided with a channel for the passage of said electrical connectors 12.1, 12.2, which in the example shown are configured as electrically conducting metal strips running through said channel.

Furthermore, said signalling device 10 has a slot 18, provided between said lower overhang 17 and said outer part 11.1 of the body 11, said slot 18 being engaged by a top edge of said side wall P of the coffeepot B (fig. 7). Extending from said outer part 11.1 of the body 11 into said slot 18 is a projection 19 (figs. 1, 2) contiguous to said arm 15 and substantially central.

Said splash screen 16 is substantially crown-shaped 16.1 having, when seen in plan view, an essentially oblong shape, the long axis of which is parallel to the longitudinal direction of said arm 15. In particular, said crown 16.1 has two sides 16.2 opening mutually outwards towards the free end of said arm 15, distal to said lower overhang 17 (fig. 2), and with the free end tapering downwards with a shape substantially complementary to that of the side wall of the coffeepot B. It will be noted that in the free end of said arm, said crown may be lower in height with respect to said sides, to enable the device to be used with a half-portion moka coffeepot.

Said arm 15 and said oval crown 16.1 are configured to house, on the inside of the crown, the top part S of the conduit C of a plurality of moka coffeepots that are dimensionally different from one another.

In particular, the arm 15 and the splash screen 16 of the device 10 extend on the inside of the coffeepot B, starting from the side wall P of said coffeepot, for a length that is greater than the distance between the axis of said central conduit C and any area of said side wall P.

Said crown 16.1 has a continuous wall in the area of said electrodes 12.3, 12.4, while a plurality of slots 16.3 is provided along the remaining part of said wall.

Said outer part 11.1 supports a guard R, for example essentially spherical (but also configurable in various other shapes), which encloses said electric alert means 14, said source 13 of electrical energy and part of the related electrical circuit means. Said guard R with the related source 13, electric alert means 14 and respective part of the electrical circuit are dismountably connected to said outer part 11.1, so as to enable the user to separate them temporarily from said outer part 11.1.

In particular, said device 10 has a balanced shape with respect to the top edge of the wall P of the coffeepot B, which engages said slot 18, wherein said outer part 11.1 of the body 11 comprises said electrical alert means, e.g. acoustic means, 14 and said source 13 of electrical energy and forms an element, on the outside of the coffeepot B, for anchoring of the body 11, while said inner part 11.2 comprises said arm 15, from which said overhang 17 and said splash screen 16 extend underneath, and form between them a free space, protected from splashes of liquid, in the area of said electrodes 12.3, 12.4, placed mutually next to one another at a short distance. Said overhang 17 provides an element, inside the coffeepot B, for anchoring the body 11 to the top edge of the wall P, in cooperation with said outer part 11.1 of said body 11.

Said projection 19 is preferably wedge-shaped, tapering downwards, and is configured to enable the breadth of the slot 18 provided between said anchoring elements 11.1 and 17 in the area of the top part of the wall P of the coffeepot B to be calibrated, by moving the device 10 manually. In this way, it is possible to compensate for variations in thickness of the side wall P of the coffeepot B.

In particular, the wall P of the coffeepot B has angled areas, and said slot 18 between said first anchoring element 11.1 and said second anchoring element 17 is configured to have a width substantially corresponding to the thickness of the side wall P of the moka coffeepot, at least at the angled areas of the wall P. Furthermore, said second anchoring element 17 has a wall with a convex surface opposed to said side wall, so that after applying said device 10 to a flat area of said wall P, and manually rotating the device around the axis of the vertical central conduit C, the adjacent angle on said wall P engages with a slight pressure in said slot 18 between said convex surface wall of said lower overhang 17 and said outer part 11.1.

This arrangement, as mentioned, makes it possible to compensate for variations in thickness of the wall P of the pot B of different coffeepots.

The outer part 11.1 of the body 11 has fins in the manner of a heat dissipator, so as to reduce the thermal influence of said outer part 11.1 on the electrical means provided in said outer part 11.1 of said body 11.

Fig. 8 shows a variant of an embodiment of the device 10 according to the invention, wherein only a first electrical connector 12.1 has a corresponding first electrode 12.3 extending below said lower overhang 17 inside the coffeepot B, while a second electrical connector 12.2' has a corresponding second electrode 12.4' placed in the slot 18 (between said outer part 11.1 and said projection 17 of the body 11) in electrical contact with the top edge of the side wall P of the coffeepot B, made of electrically conducting metal. In this arrangement, said second electrode 12.4' is electrically earthed and causes the closure of the electrical circuit branched from the electrical source 13 to the electric alert means 14 when said first electrode 12.3 is in contact with the coffee infusion in the coffeepot B.

In this way, the risk of the unwanted and premature closure of the afore-mentioned electrical circuit is further avoided, and thus the emission of an early signal, not corresponding to the predetermined level of liquid in the coffeepot being reached.

Furthermore, according to a variant of the invention not illustrated, in the afore-mentioned electrical circuit branched from the electrical source to the electric alert means, through said electrical connectors and corresponding electrodes, there are provided manually-operated electric switch means, which enable the user to interrupt the circuit, and thus the corresponding signal, at his or her discretion.

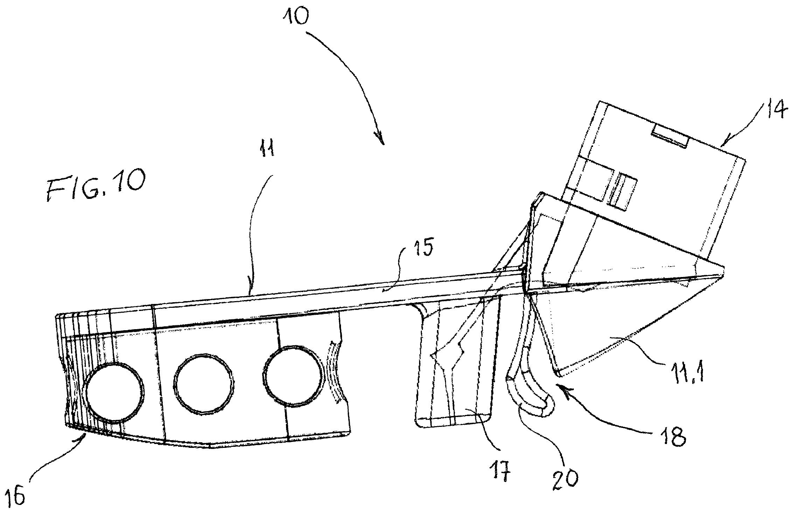

Figure 10 shows another variant of an embodiment of the device 10 according to the invention, wherein the device comprises elastic gripping means 20 provided in said slot 18 of said body 11, which dismountably engage with a top edge area of the side wall P of said coffeepot B.

It will be noted that said electrical alert means 14 are configured to emit at least one acoustic, optical-luminous, and/or mechanical vibration signal. According to a variant not shown in the drawings, the body 11 of the device 10 engages a top edge area of the side wall P of said coffeepot B configured as a spout for pouring the infusion and comprising channel means or pouring conduit means, for the infusion to flow to the outside of the coffeepot B.

### Operation:

While gripping the signalling device 10, the splash screen crown 16 in introduced into the coffeepot B, placing the cavity of the crown on the top S of the vertical conduit C from which, through the opening A, the coffee mix comes out and at the same time the slot 18 is inserted on the top edge of the side wall P of the coffeepot. The device 10 is turned slightly around the axis of the conduit C. The signalling device 10 is thereby placed stably in operation on the coffeepot B. One waits for the coffee infusion to begin to rise through the conduit C and be deposited inside the coffeepot B. When the coffee mixture reaches the electrodes 12.3, 12.4 (according to fig. 7) it causes the automatic closure of the electrical circuit branched from the electrical source 13 to the electric alert means 14, which emit a signal (acoustic, visual, mechanical vibration, or another type of signal) alerting the user of the need to stop the boiling. The user, for example, can thereby quickly turn off the source of heat and pour the coffee, thereby avoiding the unpleasant and frequent problems of coffee splashing out of the coffeepot onto the hob of the cooker, or of coffee burnt inside the coffeepot, with the need to repeat the operation, and so on.

When the user pours the coffee into the cup, thereby causing the level of liquid inside the coffeepot B to be lowered, it will automatically interrupt the contact of the electrodes 12.3, 12.4 with the coffee infusion and thus will interrupt the afore-mentioned electrical circuit and the corresponding alert signal emitted by the electric alert means 14.

The shape and size characteristics of the parts of the signalling device 10 according to the invention represent an optimal compromise, which enables the device to work on a series of different moka-type coffeepots, ranging in size for example from a half-portion moka coffeepot to a six-cup moka coffeepot.

As can be seen from the above, with the present invention it is possible to achieve the objects indicated in the introduction in a simple, effective manner.

Indeed, the present invention provides a device for signalling the level reached by the coffee infusion in a moka coffeepot, which can ensure, during the coffee infusion preparation phase, the emission of an alarm signal once the level of liquid in the coffeepot reaches a predetermined level, thereby preventing splashes of liquid from causing an early signal. Moreover, the present invention provides a device for signalling the level reached by the coffee infusion in a moka coffeepot, which is operatively stable and prevents splashes of liquid from leaving the coffeepot while the coffee infusion is being prepared.

Furthermore, the present invention provides a device for signalling the level reached by the coffee infusion in a moka coffeepot, which is structurally simple, safe and reliable to operate and economical to manufacture.

## Claims

1. Device (10) for signalling the level reached by the coffee infusion in a moka coffeepot (B) provided with a vertical central conduit (C), the top area (S) of which has at least one opening (A) for the delivery of the coffee infusion, comprising:
- two electrical connectors (12.1; 12.2, 12.2') having respective end electrodes (12.3; 12.4, 12.4'), of which at least one (12.3) extends inside the coffeepot (B);
- a source (13) of electrical energy, the poles (P+, P-) of which are electrically connected, respectively, to the ends of said electrical connectors (12.1; 12.2, 12.2') opposite said electrodes (12.3; 12.4, 12.4');
- electrical alert means (14), powered by said source (13) in the event of the passage of electrical current between said electrodes (12.3; 12.4, 12.4');
- a body (11) made of electrically insulating material, supporting said electrical connectors (12.1; 12.2, 12.2') with respective end electrodes (12.3; 12.4, 12.4'),
- a slot (18) provided in said body (11) with which a top edge of the side wall (P) of said coffeepot (B) is engaged;
- an outer part (11.1) of said body (11), including said electric alert means (14) and said source (13) of electrical energy, and providing a first element, external to the coffeepot (B), for anchoring said body (11) at said slot (18),
**characterized in that** said body (11) comprises:
- an inner part (11.2) comprising a rigid arm (15), from which protrude a lower overhang (17) and a splash screen (16) that protects at least one (12.3) of said electrodes (12.3; 12.4, 12.4') from splashes of liquid, and wherein said overhang (17) provides a second element, inside the coffeepot (B), for anchoring said body (11) at said slot (18) and in cooperation with said first outer element (11.1) of said body (11),
**and in that** said rigid arm (15) supports said splash screen (16) at least in the area of said top area (S) of said vertical central conduit (C) of said coffeepot (B) and said splash screen (16) at least laterally wraps around said top area (S) of said central conduit (C) of said coffeepot (B) in the area of said at least one opening (A).

2. Signalling device (10) according to claim 1, **characterized in that** said electrodes (12.3, 12.4) protrude into said coffeepot (B), from said lower overhang (17), in which there is provided a channel for the passage of said electrical connectors (12.1, 12.2).

3. Signalling device (10) according to claim 1, **characterized in that** one (12.3) of said electrodes (12.3; 12.4, 12.4') protrudes from said lower overhang (17) into said coffeepot (B) and the other of said electrodes (12.4') is positioned in electrical contact with an area of the side wall (P) of the coffeepot (B), made of an electrically conductive metal.

4. Signalling device (10) according to claim 1, wherein the side wall (P) of said coffeepot (B) has angled areas, **characterized in that** said slot (18) between said first anchoring element (11.1) and said second anchoring element (17) is configured with a width substantially corresponding to the thickness of the side wall (P) of the moka coffeepot, at least at the angled areas of the wall (P), and said second anchoring element (17) has a wall with a convex surface opposed to said side wall (P), so that after applying said device (10) to a flat area of said wall (P), and manually rotating the device around the axis of the vertical central conduit (C), the adjacent angle on said wall (P) engages with a slight pressure in said slot (18) between said convex surface wall of said lower overhang (17) and said outer part (11.1).

5. Signalling device (10) according to claim 1, **characterized in that** it comprises a guard (R) supported by said outer part (11.1) and that it includes at least said source (13) of electrical energy, said electrical alert means (14) and at least one part of the related electrical power and control circuit, **and in that** said guard (R) with the related source (13), electric alert means (14) and respective part of the electrical circuit are dismountably connected to said outer part (11.1), so as to enable the user to separate them temporarily from said outer part (11.1).

6. Signalling device (10) according to claims 1 and 4, **characterized in that** it comprises a projection (19), provided in the area of said slot (18) between said first anchoring element (11.1) and said second anchoring element (17) and configured to compensate for variations in thickness of the side wall (P) of the coffeepot (B).

7. Signalling device (10) according to claim 1, **characterized in that** said splash screen (16) is substantially crown-shaped (16.1) having, when seen in plan view, an oblong outline, **and in that** said arm (15) and said crown (16.1) are configured to house, on the inside of the crown, the top part (S) of the conduit (C) of a plurality of moka coffeepots that are dimensionally different from one another.

8. Signalling device (10) according to claim 7, **characterized in that** said crown (16.1) has two sides (16.2) opening mutually outwards towards the free end of said arm (15), wherein said crown is lower in height with respect to said sides, to enable the device (10) to be used with a half-portion moka coffeepot.

9. Signalling device (10) according to claim 7 and/or 8, **characterized in that** said crown (16.1) has a continuous wall in the area of at least one of said electrodes (12.3, 12.4), while a plurality of slots (16.3) is provided along the remaining part of said wall.

10. Signalling device (10) according to claim 1, **characterized in that** said outer part (11.1) of the body (11) has fins in the manner of a heat dissipator, so as to reduce the thermal influence of said outer part (11.1) on the electrical/electronic means provided in said outer part (11.1) of said body (11).

11. Signalling device (10) according to claim 1, **characterized in that** it comprises elastic gripping means (20) provided in said slot (18) of said body (11), which dismountably engage with a top edge area of the side wall (P) of said coffeepot (B).

12. Signalling device (10) according to claim 1, **characterized in that** said electric alert means are configured to emit at least one acoustic, optical-luminous, respectively mechanical vibration signal.

13. Signalling device (10) according to claim 1, **characterized in that** said body (11) is engaged on a top edge area of the side wall (P) of said coffeepot (B), configured as a spout for pouring the infusion and comprising channel means, respectively pouring conduit means, for the infusion to flow to the outside of the coffeepot (B).

## Patentansprüche

1. Vorrichtung (10) zur Signalisierung des erreichten Niveaus des Kaffeeaufgusses in der Kanne (B) einer Mokkakaffeemaschine, die mit einem zentralen vertikalen Kanal (C) versehen ist, deren oberer Bereich (S) mindestens eine Öffnung (A) zur Ausgabe des Kaffeeaufgusses aufweist, umfassend:
- zwei elektrische Anschlüsse (12.1; 12.2, 12.2'), die entsprechende Endelektroden (12.3; 12.4, 12.4') aufweisen, von denen sich mindestens eine (12.3) in das Innere der Kanne (B) erstreckt;
- eine elektrische Energiequelle (13), deren Polaritäten (P+, P-) jeweils mit den Enden der besagten elektrischen Anschlüsse (12.1; 12.2, 12.2') elektrisch verbunden sind, die den besagten Elektroden (12.3; 12.4, 12.4') gegenüberüberliegen;
- elektrische Warnmittel (14), die von der besagten Quelle (13) versorgt werden, wenn elektrischer Strom zwischen den besagten Elektroden (12.3; 12.4, 12.4') fließt;
- einen Körper (11) aus elektrisch Isolierendem Material, der die besagten elektrischen Anschlüsse (12.1; 12.2, 12.2') mit entsprechenden Endelektroden (12.3; 12.4, 12.4') trägt,
- einen Schlitz (18), der in dem besagten Körper (11) vorgesehen ist und in den eine obere Randzone der Seitenwand (P) der besagten Kanne (B) eingreift;
- einen äußeren Teil (11.1) des besagten Körpers (11), der die besagten elektrischen Warnmittel (14) und die besagte Quelle (13) elektrischer Energie enthält, und der mit einem ersten Element ausgestattet ist, das sich außerhalb der Kanne (B) befindet, um den besagten Körper (11) in Übereinstimmung mit dem besagten Schlitz (18) zu verankern,
**dadurch gekennzeichnet, dass** der besagte Körper (11) Folgendes umfasst:
- einen inneren Teil (11.2) mit einem starren Arm (15), von dem sich ein unterer Überhang (17) und ein Spritzschutz (16) vorschieben, der mindestens eine (12.3) der besagten Elektroden (12.3; 12.4, 12.4') vor Flüssigkeitsspritzern schützt, und wobei der besagte Überhang (17) ein zweites, im Inneren der Kanne (B) befindliches Element zur Verankerung des besagten Körpers (11) In Übereinstimmung mit dem besagten Schlitz (18) und im Zusammenwirken mit dem besagten ersten äußeren Element (11.1) des besagten Körpers (11) bereitstellt,
**und dadurch gekennzeichnet, dass** der besagte starre Arm (15) den besagten Spritzschutz (16) zumindest in Übereinstimmung mit dem besagten oberen Bereich (S) des besagten zentralen vertikalen Kanals (C) der besagten Kanne (B) trägt und der besagte Spritzschutz (16) zumindest seitlich den besagten oberen Bereich (S) des besagten zentralen Kanals (C) der besagten Kanne (B) in Übereinstimmung mit der besagten zumindest einen Öffnung (A) umhüllt.

2. Signalisierungsvorrichtung (10) gemäß Anspruch 1, **dadurch gekennzeichnet, dass sich** die besagten Elektroden (12.3, 12.4) in die besagte Kanne (B) aus dem besagten unteren Überhang (17) vorschieben, in dem ein Kanal für den Durchgang der besagten elektrischen Anschlüsse (12.1, 12.2) vorgesehen Ist.

3. Signalisierungsvorrichtung (10) gemäß Anspruch 1, **dadurch gekennzeichnet, dass sich** eine (12.3) der besagten Elektroden (12.3; 12.4, 12.4') von dem besagten unteren Überhang (17) in die besagte Kanne (B) vorschiebt und die andere besagten der Elektroden (12.4') in elektrischem Kontakt mit einem Bereich der Seitenwand (P) der Kanne (B), gefertigt aus elektrisch leitendem Metall, angeordnet ist.

4. Signalisierungsvorrichtung (10) gemäß Anspruch 1, wobei die Seitenwand (P) der besagten Kanne (B) Kantenbereiche aufweist, **dadurch gekennzeichnet, dass** der besagte Schlitz (18) zwischen dem besagten ersten Verankerungselement (11.1) und dem besagten zweiten Verankerungselement (17) mit einer Breite ausgebildet ist, die im Wesentlichen der Dicke der Seitenwand (P) der Mokkakaffeemaschine entspricht, zumindest in Übereinstimmung mit den Kantenbereichen der Seitenwand (P) selbst, und das besagte zweite Verankerungselement (17) eine konvexe Oberflächenwand gegenüber der besagten Seltenwand (P) aufweist, so dass, nachdem die besagte Vorrichtung (10) auf einem flachen Bereich der besagten Wand (P) angebracht wurde, durch manuelles Drehen der Vorrichtung selbst um die Achse des zentralen vertikalen Kanals (C), die benachbarte Kante der besagten Wand (P) bei geringer Kraft In den besagten Schlitz (18) zwischen der besagten konvexen Oberflächenwand des besagten unteren Überhangs (17) und dem besagten äußeren Teil (11.1) eingreift.

5. Signallsierungsvorrichtung (10) gemäß Anspruch 1, **dadurch gekennzeichnet, dass** sie einen Schutzraum (R) umfasst, der von dem besagten äußeren Teil (11.1) getragen wird und der zumindest die besagte Quelle (13) elektrischer Energie, die besagten elektrischen Warnvorrichtungen (14) und einen Teil zumindest des jeweiligen elektrischen Stromversorgungs- und Steuerkreises einschließt, **und dadurch gekennzeichnet, dass** der besagte Schutzraum (R) mit der dazugehörigen Quelle (13), den elektrischen Warnmitteln (14) und dem jeweiligen Teil des elektrischen Kreislaufes In einer zerlegbaren Weise in Bezug auf den besagten äußeren Tell (11.1) so verbunden sind, dass sie es dem Benutzer ermöglichen, sie vorübergehend von dem besagten äußeren Teil (11.1) zu trennen.

6. Signalisierungsvorrichtung (10) gemäß den Ansprüchen 1 und 4, **dadurch gekennzeichnet, dass** sie einen Vorsprung (19) umfasst, der in Übereinstimmung mit dem besagten Schlitz (18) zwischen dem besagten ersten Verankerungselement (11.1) und dem besagten zweiten Verankerungselement (17) vorgesehen ist und so konfiguriert ist, dass er die Variationen der Dicke der Seitenwand (P) der Kanne (B) kompensiert.

7. Signalisierungsvorrichtung (10) gemäß Anspruch 1, **dadurch gekennzeichnet, dass** der besagte Spritzschutz (16) im Wesentlichen wie eine Krone (16.1) geformt ist, die In Draufsicht einen länglichen Umriss aufweist, **und dadurch gekennzeichnet, dass** der besagte Arm (15) und die besagte Krone (16.1) so konfiguriert sind, dass sie Innerhalb der Krone selbst den oberen Teil (S) des Kanals (C) einer Vielzahl von Mokkakaffeemaschinen aufnehmen, die sich in ihren Maßen voneinander unterscheiden.

8. Signalisierungsvorrichtung (10) gemäß Anspruch 7, **dadurch gekennzeichnet, dass** die besagte Krone (16.1) zwei Seiten (16.2) aufweist, die in Richtung des freien Endteils des besagten Arms (15) voneinander gespreizt sind, wobei die besagte Krone zur Verwendung der Vorrichtung (10) in einer Halbtassen-Mokkakaffeemaschine eine verringerte Höhe in Bezug auf die besagten Seiten aufweist.

9. Signalisierungsvorrichtung (10) gemäß Anspruch 7 und/oder 8, **dadurch gekennzeichnet, dass** die besagte Krone (16.1) eine durchgehende Wand in Übereinstimmung mit mindestens einer der besagten Elektroden (12.3, 12.4) aufweist, während eine Vielzahl von Schlitzen (16.3) entlang des verbleibenden Teils der besagten Wand vorgesehen sind.

10. Signalisierungsvorrichtung (10) gemäß Anspruch 1, **dadurch gekennzeichnet, dass** der besagte äußere Teil (11.1) des Körpers (11) als Wärmeableiter gerippt Ist, um den thermischen Einfluss des besagten äußeren Teils (11.1) auf die in dem besagten äußeren Teil (11.1) des besagten Körpers (11) vorgesehenen elektrischen/elektronischen Mittel zu reduzieren.

11. Signalisierungsvorrichtung (10) gemäß Anspruch 1, **dadurch gekennzeichnet, dass** sie elastische Klemmmittel (20) umfasst, die in dem besagten einen Schlitz (18) des besagten Körpers (11) vorgesehen sind und die zerlegbar In einen oberen Randbereich der Seltenwand (P) der besagten Kanne (B) eingreifen.

12. Signalisierungsvorrichtung (10) gemäß Anspruch 1, **dadurch gekennzeichnet, dass** die besagten elektrischen Warnmittel so konfiguriert sind, dass sie mindestens ein akustisches, optisch-leuchtendes, bzw. mechanisches Vibrationssignal aussenden.

13. Signalisierungsvorrichtung (10) gemäß Anspruch 1, **dadurch gekennzeichnet, dass** der besagte Körper (11) an einem als Ausguss des Aufgusses ausgebildeten oberen Randbereich der Seitenwand (P) der besagten Kanne (B) eingreift und Kanalmittel, jeweils als Kanal zum Ausfließen des Aufgusses zur Außenseite der Kanne (B) hin aufweist.

## Revendications

1. Dispositif (10) pour signaler le niveau atteint par l'infusion de café dans la verseuse (B) d'une cafetière moka, pourvue d'un conduit vertical central (C), dont la partie supérieure (S) présente au moins une ouverture (A) pour distribuer l'infusion de café, comprenant :
- deux connecteurs électriques (12.1 ; 12.2, 12.2') ayant des électrodes d'extrémité respectives (12.3 ; 12.4, 12.4'), dont au moins une (12.3) s'étend dans la verseuse (B) ;
- une source (13) d'énergie électrique dont les polarités (P+, P-) sont reliées électriquement respectivement aux extrémités desdits connecteurs électriques (12.1 ; 12.2, 12.2') opposées auxdites électrodes (12.3 ; 12.4, 12.4') ;
- des moyens de signalisation électrique (14), alimentés par ladite source (13) en cas de passage de courant électrique entre lesdites électrodes (12.3 ; 12.4, 12.4') ;
- un corps (11) en matériau électrique isolant, qui supporte lesdits connecteurs électriques (12.1 ; 12.2, 12.2') avec des électrodes d'extrémité respectives (12.3 ; 12.4, 12.4'),
- une fente (18) prévue dans ledit corps (11) et dans laquelle une zone de bord supérieur de la paroi latérale (P) de ladite verseuse (B) est engagée ;
- une partie extérieure (11.1) dudit corps (11), comprenant lesdits moyens de signalisation électrique (14) et ladite source (13) d'énergie électrique et fournissant un premier élément, extérieur à ladite verseuse (B), pour ancrer ledit corps (11) au niveau de ladite fente (18),
**caractérisé par le fait que** ledit corps (11) comprend :
- une partie intérieure (11.2) comprenant un bras rigide (15), duquel font saillie une saillie Inférieure (17) et un écran de protection (16) protégeant des éclaboussures de liquide au moins une (12.3) desdites électrodes (12.3 ; 12.4, 12.4'), et dans laquelle ladite saillie (17) fournit un second élément, interne à ladite verseuse (B), pour ancrer ledit corps (11) au niveau de ladite fente (18) et en coopération avec ledit premier élément externe (11.1) dudit corps (11),
**et par le fait que** ledit bras rigide (15) supporte ledit écran (16) de protection au moins au niveau de ladite partie supérieure (S) dudit conduit vertical central (C) de ladite verseuse (B) et ledit écran (16) de protection enveloppe au moins latéralement ladite partie supérieure (S) dudit conduit central (C) de ladite verseuse (B) au niveau de ladite ouverture (A) au minimum.

2. Dispositif (10) de signalisation selon la revendication 1, **caractérisé par le fait que** lesdites électrodes (12.3, 12.4) font saillie dans ladite verseuse (B), à partir de ladite saillie Inférieure (17), dans lequel est prévu un canal pour le passage desdits connecteurs électriques (12.1, 12.2).

3. Dispositif (10) de signalisation selon la revendication 1, **caractérisé par le fait que** l'une (12.3) desdites électrodes (12.3 ; 12.4, 12.4') fait saillie à partir de ladite saillie inférieure (17) dans ladite verseuse (B) et l'autre desdites électrodes (12.4') est disposée en contact électrique avec une zone de la paroi latérale (P) de la verseuse (B), réalisée en métal conducteur électrique.

4. Dispositif (10) de signalisation selon la revendication 1, où la paroi latérale (P) de ladite verseuse (B) a des zones à arête, **caractérisé par le fait que** ladite fente (18) entre ledit premier élément d'ancrage (11.1) et ledit second élément d'ancrage (17) est configurée avec une largeur correspondant substantiellement à l'épaisseur de la paroi latérale (P) de la cafetière moka, au moins au niveau des zones à arête de ladite paroi (P), et ledit second élément d'ancrage (17) a une paroi à surface convexe opposée à ladite paroi latérale (P), de sorte que, après avoir appliqué ledit dispositif (10) sur une zone plane de ladite paroi (P), en faisant tourner manuellement ledit dispositif autour de l'axe dudit conduit vertical central (C), l'arête adjacente de ladite paroi (P) s'engage par un léger forçage dans ladite fente (18) entre ladite paroi à surface convexe de ladite saillie inférieure (17) et ladite partie extérieure (11.1).

5. Dispositif (10) de signalisation selon la revendication 1, **caractérisé par le fait qu'**il comprend une protection (R) supportée par ladite partie externe (11.1) et qui comprend au moins ladite source (13) d'énergie électrique, lesdits moyens de signalisation électrique (14) et au moins une partie du circuit électrique respectif d'alimentation et de commande, **et par le fait que** ladite protection (R) avec ladite source (13), lesdits moyens de signalisation électrique (14) et la partie respective du circuit électrique sont connectés de manière décomposable par rapport à ladite partie externe (11.1), de façon à permettre à l'utilisateur de les séparer temporairement de ladite partie externe (11.1).

6. Dispositif (10) de signalisation selon les revendications 1 et 4, **caractérisé par le fait qu'**il comprend une protubérance (19), prévue au niveau de ladite fente (18) entre ledit premier élément d'ancrage (11.1) et ledit second élément d'ancrage (17) et configurée pour compenser les variations d'épaisseur de la paroi latérale (P) de la verseuse (B).

7. Dispositif (10) de signalisation selon la revendication 1, **caractérisé par le fait que** ledit écran de protection (16) a substantiellement la forme d'une couronne (16.1) ayant, vue en plan, un contour oblong, **et par le fait que** ledit bras (15) et ladite couronne (16.1) sont configurés pour loger, à l'intérieur de la couronne en question, la partie supérieure (S) du conduit (C) d'une multitude de cafetières moka aux dimensions différentes les unes des autres.

8. Dispositif (10) de signalisation selon la revendication 7, **caractérisé par le fait que** ladite couronne (16.1) a deux flancs (16.2) divergeant réciproquement vers la partie d'extrémité libre dudit bras (15), dans lequel ladite couronne a une hauteur réduite par rapport auxdits flancs, pour l'utilisation du dispositif (10) dans une cafetière moka à demi-tasse.

9. Dispositif (10) de signalisation selon la revendication 7 et/ou 8, **caractérisé par le fait que** ladite couronne (16.1) a une paroi continue au niveau d'au moins l'une desdites électrodes (12.3, 12.4), tandis qu'une multitude de fentes (16.3) est prévue le long de la partie restante de ladite paroi.

10. Dispositif (10) de signalisation selon la revendication 1, **caractérisé par le fait que** ladite partie extérieure (11.1) du corps (11) est pourvue d'ailettes servant de dissipateur de chaleur, de manière à réduire l'influence thermique de ladite partie extérieure (11.1) sur les moyens électriques/électroniques prévus dans ladite partie extérieure (11.1) dudit corps (11).

11. Dispositif (10) de signalisation selon la revendication 1, **caractérisé par le fait qu'**il comprend des moyens à pince élastique (20) prévus dans ladite fente (18) dudit corps (11), qui s'engagent de manière décomposable dans une zone du bord supérieur de la paroi latérale (P) de ladite verseuse (B).

12. Dispositif (10) de signalisation selon la revendication 1, **caractérisé par le fait que** lesdits moyens de signalisation électriques sont configurés pour émettre au moins un signal acoustique, optique - lumineux, respectivement mécanique à vibration.

13. Dispositif (10) de signalisation selon la revendication 1, **caractérisé par le fait que** ledit corps (11) est engagé sur une zone de bord supérieur de la paroi latérale (P) de ladite verseuse (B) configurée en guise de bec de distribution de l'infusion, et comprend des moyens à canal, respectivement à conduit de distribution, pour faire sortir l'infusion vers l'extérieur de la verseuse (B).
